# EUROPEAN PATENT SPECIFICATION

(11) **EP 0 658 452 B1**
(45) Date of publication and mention of the grant of the patent: **15.03.2000**
(21) Application number: 94119126.4
(22) Date of filing: 05.12.1994
(51) Int. Cl.: B60C 19/08, B60C 1/00

(54) **Antistatic tyre having low-carbon black blends**
Antistatischer Reifen mit russarmen Mischungen
Bandage pneumatique antistatique contenant des mélanges pauvres en noir de carbone

(30) Priority: 14.12.1993 IT MI932615
(43) Date of publication of application: 21.06.1995
(73) Proprietor: PIRELLI PNEUMATICI Società per Azioni, 20126 Milano (IT)
(72) Inventor: Boiocchi, Maurizio, Segrate (MI) (IT); Nahmias, Marco, Milan (IT)
(74) Representative: Görg, Klaus, Dipl.-Ing.

(56) References cited:
- DE-A- 4 002 628
- DE-C- 820 543
- FR-A- 2 411 719
- GB-A- 544 757
- GB-A- 551 657
- US-A- 2 342 576
- US-A- 4 545 927
- DATABASE WPI Week 8629, Derwent Publications Ltd., London, GB; AN 86-187702 & JP-A-61 122 003 (SUMITOMO RUBBER IND. LTD.) 10 June 1986
- DATABASE WPI Week 8632, Derwent Publications Ltd., London, GB; AN 86-209498 & JP-A-61 143 203 (YOKOHAMA TIRE&RUBBER CO LTD.) 30 June 1986
- DATABASE WPI Week 9051, Derwent Publications Ltd., London, GB; AN 90-379997 & JP-A-2 274 740 (TOYO TIRE&RUBBER CO. LTD.) 8 November 1989

## Description

The present invention relates to an antistatic tyre the tread band of which has a low carbon black content, of the type comprising at least one carcass ply anchored, at respective opposite edges thereof, to a pair of bead cores arranged in corresponding beads defined along the inner circumferential edges of said tyre; at least one belt layer extending circumferentially about said carcass ply; a tread band disposed circumferentially about the belt layer and externally exhibiting a rolling surface designed to come into contact with the ground.

It is known that vehicle tyres in general must have, in addition to usual roadholding and ride comfort features, also a certain degree of electric conductivity so that the electrostatic charges inevitably stored by the vehicle on running may be conveniently discharged to the ground, at least within some limits.

In this connection, there are several different regulations for classifying the tyres depending on the electric resistivity they show and/or fixing the maximum resistivity limits that the tyres must exhibit based on the intended uses. By way of example, the German regulation of the WIRTSCHAFTSVERBAND DER DEUTSCHEN KAUTSCHUKINDUSTRIE E.V. (W.d.K. Leitlinie 110) classifies tyres into two different classes, identifying in the first class tyres having an electric resistance lower than 10⁶ ohm, and in the second class tyres having an electric resistance lower than 10⁸ ohm. Still by way of example, according to BSI (British Standards Institution) regulations BS 2050:1978 tyres used at the inside of hospitals must have an electric resistance value lower than 10⁴ ohm. Still in accordance with these regulations, tyres used on industrial vehicles designed to carry explosives must not have an electric resistance higher than 5x10⁵ ohm.

In tyres of earlier conception, for example those disclosed in GB Patent No. 551 576, the necessary tyre conductivity was ensured by a particularly conductive rubber strip extending from the radially outer surface of the tread to the tyre bead, where it came into direct contact with the mounting rim located between the outermost carcass ply and the outer surface of the tyre.

Substantially the same solution is described also in DE-C-820 543.

GB-A-544 757 teaches that an electrically conducting rubber cement, when applied to specific portions of a pneumatic tyre, inside or outside the carcass body, or even inserted in said body, will function effectively in discharging static electricity.

JP52-47202 teaches that, as an alternative to the electroconductive rubber tape connecting the bead portions of the tire, in contact whit the wheel rim, with an electroconductive rubber piece appropriately buried in the tread rubber, electroconductive rubber substances may be added to only some parts of the tire in order not to adversely influence the various properties required for the tyre.

Such a solutions have not been in use for a long time and these were hardly used in the past because of the construction complications generated during the tyre manufacture and the problems relating to the qualitative features of the finished product.

Consequently, in the tyres that are presently commonly used and commercialized, the requisite electric conductivity is ensured by the presence of the carbon black normally used as a reinforcing filler in the blends forming the different tyre parts.

In this respect, the tyre manufacturers' efforts have been tendentially oriented towards researches aiming at finding out the modalities for use of carbon black in order to achieve the requisite electric conductivity values. For example, Patent FR 793,507 describes a blend made conductive by an appropriate selection of the characteristics of the carbon black introduced thereinto. Patent US 4,642,202 discloses a process for preparing conductive rubbers having a resistivity lower than 10 ohm*cm, consisting in adding to a normal blend formulation a composition formed of at least one material having a low compatibility with rubber and mixed with a highly conductive material such as some specific types of carbon black or metal powders. Patent US 5,173,135 describes a radial tyre for motor vehicles, the sidewalls of which are made of a blend consisting of an elastomeric material containing conductive black.

In tyres of the above type the electrostatic charges stored in the vehicle bodywork on running are transferred to the tyre itself through the wheel rim and completely cross the tyre structure moving through the carbon black aggregates present in the polymeric matrix of the elastomeric material to be ultimately transferred to the ground at the contact area between the rolling surface of the tread band and the ground itself.

Under this situation, the electric resistance value detectable on the above tyres can vary depending on the quantity and type of carbon black introduced into the blends forming the different parts of the tyre from a minimum of 10² ohm to a maximum of 10⁶ ohm, and this value is therefore capable of complying with most requirements.

It is pointed out that all resistivity and electric resistance values cited in the present description are intended as measured according to UNI 4288-71 Standard.

The foregoing being stated, it is noted that tyres to be used in particular on motor-vehicles have been recently developed the tread band of which is made of a blend in which carbon black is containted in minimum or even negligible amounts, being for example completely or mostly replaced by silicon-based reinforcing fillers, such as silicon oxides or several different types of silicates for example. In the following such reinforcing fillers will be generally referred to as "silicon".

The fundamental property of tyres thus conceived is a remarkably reduced rolling resistance as compared to the resistance that can be found in tyres with a tread band having a high carbon black content, in that the use of silicon-based reinforcing fillers instead of carbon-containing fillers gives the blend better hysteretic features.

It has been found however that a carbon black reduction in the blend forming the tread band or a complete elimination thereof involves an important and on the other hand undesired increase in the electric resistance of the tyre, in that the conductive bridges supplied by the carbon present in carbon black are missing.

The electrostatic charges produced in the vehicle on running therefore cannot be conveniently discharged to the ground and tend to be stored, thereby reaching very high potentials.

Under this situation at the moment that the vehicle is touched by a person or an object creating a conductive connection between the vehicle and ground, the electrostatic energy previously stored is completely and suddenly discharged thereby producing an electric discharge of high potential, presently estimated in the order of 25 KV. On the contrary its intensity is deemed to be very low, in the order of milli-ampere.

These electric discharges, besides being very bothersome when they occur to a person who is touching the motor-vehicle, also constitute a factor of great danger as regards supply operations taking into account the fact that the discharge can take place between the motor-vehicle bodywork and the fuel delivery gun.

It is also to note that storage of the electrostatic charges in a running vehicle also gives rise to frequent electric discharges between different parts of the vehicle, causing unacceptable operating noise in the radio sets and/or any other electric or electronic apparatus installed on board of the vehicle.

According to the present invention, it has been found that the electric resistance of a tyre with a tread band having a low carbon black content and high silicon (or other non conductive filler) content can be greatly reduced and brought to the requisite values if at least one conductive insert preferably extending over the whole circumferential extension of the tyre is associated with the tread band, said insert being such arranged and passing through the whole tread band thickness in such a manner that it performs the function of a conductive connection between the ground and one of the belt layers or the carcass ply, or a sidewall or another sufficiently conductive part of the tyre.

The invention relates to an antistatic tyre, in particular having a low rolling resistance, characterized by the features of the second part of independent claim 1.

Advantageously, the conductive insert exhibits an inner end that, depending on cases, can be arranged in contact relationship with the belt layer, the carcass ply or the elastomeric material forming one tyre sidewall, extending externally of the carcass ply from said bead to a corresponding side edge of the tread band.

Preferably, the conductive insert extends over the whole circumferential extension of the tread band and, in one embodiment, is located at a centered position relative to the equatorial plane of the tyre and exhibits a width, measured parallelly of the tyre axis, included between 2 mm and 40 mm.

In a second embodiment the tyre comprises at least two of said conductive inserts, located at symmetrically spaced apart positions relative to an equatorial plane of the tyre, each adjacent to one of the side edges of the tread band.

In addition, at least at the rolling surface the extension of each conductive insert is provided to be broken by transverse cut-outs formed in the tread band to define respective blocks in said rolling surface. In this case the conductive inserts should be preferably associated with respective rows of mutually offset blocks so that at least one of the inserts is always in contact with the ground.

In the presence of two or more conductive inserts, the sum of the insert widths measured parallelly of the tyre axis, is preferably included between 4 mm and 50 mm.

Advantageously, the elastomeric material forming the conductive insert containing carbon black-based reinforcing fillers has an electric resistivity lower than 10³ Kohm*m, whereas the elastomeric material forming the tread band containing silicon-based reinforcing fillers has an electric resistivity greater than 10⁶ Kohm*m.

At all events and to best advantage, the following proportion is to be taken into account: the greater the resistivity of the material forming the tread band is, the lower the resistivity of the blend forming the conductive insert.

Further features and advantages will become more apparent from the detailed description of some preferred embodiments of an antistatic tyre made of blends having a low carbon black content, according to the present invention, given hereinafter by way of non-limiting example with reference to the accompanying drawings, in which:
- Fig. 1 is a fragmentary cross sectional view of one embodiment of a tyre according to the invention;
- Fig. 2 is a fragmentary cross sectional view of a second embodiment of the tyre in reference.

Referring to the drawings, an antistatic tyre in accordance with the present invention has been generally identified by reference numeral 1.

Conventionally tyre 1 comprises at least one carcass ply 2 the opposite side edges of which are folded up around corresponding anchoring bead cores 3, each incorporated in a bead 4 defined along an inner circumferential edge of the tyre at which the engagement of the tyre itself on a mounting rim 5 being part of a vehicle wheel takes place.

Applied to the carcass ply 2 along the circumferential extension thereof is one or more belt layers 6 made of textile or metal cords incorporated in a blend sheet.

Also applied to the external surface of the carcass ply 2 at respective opposite side positions thereof is a pair of sidewalls 7 each of which substantially extends from the bead 4 until the so-called "shoulder" region 8 of the tyre, defined in the vicinity of the end edges of the belt layers 6.

To the ends of the present invention, the elastomeric material blends employed in making the sidewalls 7, belt layers 6 and carcass ply 2 respectively may advantageously be of a high-carbon black type, so as to exhibit an electric resistivity not exceeding 10³ Kohm*m.

A tread band 9 is circumferentially disposed around the belt layers 6, the side edges of said tread band terminating at the shoulders 8 and being connected to the sidewalls 7. The tread band 9 externally exhibits a rolling surface 9a arranged to act in contact relationship on the ground, in which surface circumferential grooves 10 alternating with the transverse cut-outs may be formed. Said grooves are not shown in the accompanying figures and they define a plurality of blocks 11 distributed in one or more circumferential rows 2.

In the tyre 1 made in accordance with the present invention, the tread band 9 is made of an elastomeric material blend in which the carbon black, usually employed as the reinforcing filler in the remaining parts of the tyre itself, is completely or almost completely replaced by a silicon or another non conductive material adapted to improve the hysteretic features of the tread band and, as a result, reduce the tyre rolling resistance under use conditions. The presence of silicon in place of carbon black however involves an increase in the electric resistivity of the blend forming the tread band the value of which may easily exceed 10⁶ Kohm*m.

According to the present invention, problems resulting from the high resistivity of the low-carbon black blend forming the tread band 9 are solved by arranging at least one conductive insert 12 in the tread band itself, which insert is preferably made of an elastomeric material having an electric resistivity lower than that of the elastomeric material forming the tread band. The conductive insert 12 preferably extending according to the whole circumferential extension of the tyre 1, crosses the tread band 9 through the whole thickness thereof so as to exhibit one outer end 12a exposed to the outside which is flush with the rolling surface 9a in order to get into contact relation with the ground, so that the electric conductivity between the ground and the tyre will be increased. The conductive insert 12, on its side opposite to the outer end 12a has an inner end 12b that, depending on cases, can be arranged in contact relationship with one of the sidewalls 7 of the tyre or any other tyre part having an electric conductivity sufficient to ensure a good conductive connection between the ground and the rim 5 and therefore the vehicle bodywork, through the tyre 1.

In order to ensure a good conductive connection between the tyre 1 and the ground through the tread band 9, the conductive insert 12 is provided to be made of elastomeric material-based blends having an electric resistivity lower than 10³ Kohm*m, preferably achieved through the use of carbon black reinforcing fillers in said blends. Should the electric resistivity of the tread band be equal to or higher than 10⁸ Kohm*m, the conductive insert would preferably have an electric resistivity lower than 100 Kohm*m or equal thereto. At all events, in general terms, the greater the electric resistivity of the parts of the tread band 9 other than the conductive insert 12, the lower the electric resistivity to be given to said insert.

The Applicant deems it suitable to this end to observe the rule of coupling blends for treads and blends for conductive inserts the resistivity values of which, measured in Kohm*m, are such conceived that the algebraic sum of the respective exponents does not exceed 11; for example, in the above case where values are exactly 10⁸ and 10², one has 8+2=10. By modifying the axial size of the insert it will be then possible to give the tyre the desired electric resistance value minimizing the noise effect caused by the presence of the insert itself in the tread band.

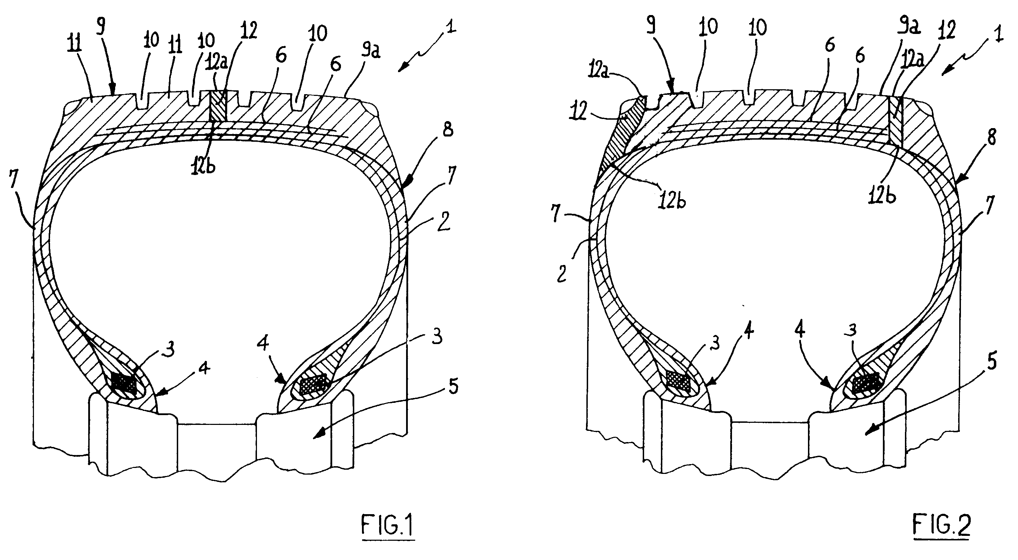

Referring particularly to Fig. 1, the example therein shown contemplates the presence of a single conductive insert 12 located at a centered position relative to the equatorial plane of the tyre 1. In this case, the conductive insert 12 preferentially has a width, measured parallel to the tyre axis, included between 2 mm and 40 mm. Lower or higher width values than the above could give rise to a weak reliability in the conductive connection with the ground or an excessive influence of the conductive insert on the tyre rolling resistance, respectively.

Still referring to Fig. 1, the inner end 12b of the conductive insert 12 acts in contact relationship on the outermost one of the belt layers 6. Under this situation, the electric connection between the conductive insert 12 and rim 5 can advantageously take place through the metal cords optionally arranged in the belt layer 6 and carcass ply 2, or through the low-resistivity elastomeric material employed in making the plies themselves.

We refer now to Fig. 2. In the tyre therein shown the presence of at least two conductive inserts 12 is provided and they are placed at symmetrically spaced apart positions relative to the tyre equatorial plane. In particular, each of the conductive inserts 12 is located adjacent to one of the side edges of the tread band 9 and its inner end 12b acts in contact relationship on the carcass ply 2 and/or the sidewall blend. Should the circumferential extension of each insert 12 be broken by effect of the presence of said transverse cut-outs in the tread band 9, it would be advantageous to envisage the association of the conductive inserts with corresponding rows of mutually offset blocks 11, so that, at each moment, at least one of the conductive inserts 12 is in contact relationship with the ground. In the above case, in order to ensure the continuous presence of this contact with the ground, it would be convenient for said inserts to be disposed, in respect of the type of tread pattern present on the band, in an asymmetric position relative to the equatorial plane of the tyre.

Alternatively, the use of two conductive inserts disposed on the tyre shoulders symmetrically to the equatorial plane would be convenient, said inserts being in this case made of blends adapted to achieve an evener and more constant wear in these particularly critical tread areas due to the presence of high-silicon blends.

Preferably, in the presence of two or more conductive inserts 12 the sum of the insert widths is provided to be in the range of 4 mm to 50 mm.

The present invention achieves important advantages.

The presence of the conductive inserts 12 in the tread band 9 in fact ensures that the vehicle bodywork on which the tyre in reference is mounted will be constantly connected to the ground, thereby eliminating any problem related to the use of tread bands made of low-carbon black elastomeric materials, as those having a high silicon content.

Note should be also taken of the fact that the electric conduction carried out by utilizing the belt layers 6 and/or carcass layers 2 too, as well as the sidewalls 7 and any other tyre part, advantageously makes it possible to use conductive inserts the extension of which in a radial direction is tightly restrained to the tread band thickness without the necessity of using any additional elements for connecting them to the rim, as the presence of said elements in the tyre structure could undesirably alter the operating features thereof.

It should be also recognized that, since the extension of the conductive insert or inserts is limited to the tread band thickness, said inserts can be directly associated with the tread band during the usual blend extrusion steps carried out for making the tread band itself, without requiring any additional working in the subsequent assembling steps of the different tyre parts.

Obviously modifications and variation may be made to the invention as conceived, all of them falling within the scope of the invention, as defined in the claims.

## Claims

1. A vehicle tyre for mounting on a rim, comprising:
- at least one carcass ply (2) anchored, at respective opposite edges thereof, to a pair of bead cores (3) arranged in corresponding beads (4) defined along the inner circumferential edges of said tyre (1);
- at least one belt layer (6) extending circumferentially about said carcass ply (2);
- a tread band (9) disposed circumferentially about the belt layer (6) and externally exhibiting a rolling surface (9a) designed to come into contact with the ground;
- means being provided for discharging to the ground the electrostatic charges stored on the vehicle through a conductive path formed into the tire structure;
characterized in that
- said carcass ply (2) and belt layer (6) are conductive and in electric contact with each other;
- said tread band (9) is made of a filler including blend whose resistivity is not such as to constitute a conductive path from said rolling surface (9a) to said at least one conductive belt layer (6);
- said discharging means include at least one conductive insert (12) radially extending through the whole tread band (9) thickness, of a blend exhibiting an electric resistivity lower than that of the blend forming said band, to make a conductive path from said rolling surface (9a) to said at least one conductive belt layer (6).

2. A tyre according to claim 1, characterized in that said conductive insert (12) exhibits an inner end (12b) in contact with said belt layer (6).

3. A tyre according to claim 1, characterized in that said conductive insert (12) exhibits an inner end (12b) in contact with said carcass ply (2).

4. A tyre according to claim 1, characterized in that said conductive insert (12) exhibits an inner end in contact with the elastomeric material forming one tyre sidewall (7), said sidewall extending externally of the carcass ply (2) from said bead (4) to a corresponding side edge of the tread band (9).

5. A tyre according to claim 1, characterized in that said conductive insert (12) extends over the whole circumferential extension of the tread band (9).

6. A tyre according to claim 5, characterized in that said conductive insert (12) is located at a centered position relative to the equatorial plane of the tyre (1).

7. A tyre according to claim 5, characterized in that it comprises at least two of said conductive inserts (12) located on the opposite sides of said equatorial plane.

8. A tyre according to claim 7, characterized in that said conductive inserts (12) are located at positions spaced apart symmetrically of the equatorial plane of the tyre (1), adjacent to the side edges of the tread band (9).

9. A tyre according to claim 7, characterized in that at least at the rolling surface (9a), the extension of each conductive insert is broken by transverse cut-outs formed in the tread band (9) to define respective blocks (11) in said rolling surface, said conductive inserts (12) being associated with respective rows of mutually offset blocks.

10. A tyre according to claim 5, characterized in that said conductive insert (12) has a width, measured parallelly of the tyre axis, included between 2 mm and 40 mm.

11. A tyre according to claim 7, characterized in that the sum of the conductive insert (12) widths measured parallelly of the tyre axis, is included between 4 mm and 50 mm.

12. A tyre according to claim 1, characterized in that the blend forming the conductive insert has an electric resistivity equal to or lower than 10³ Kohm*m.

13. A tyre according to claim 12, characterized in that the blend forming the conductive insert (12) contains carbon black-based reinforcing fillers.

14. A tyre according to claim 13, characterized in that the blend forming the tread band (9) and the blend forming the conductive insert (12) have such respective electric resistivity values, measured in Kohm*m, that the algebraic sum of their exponents is not higher than 11.

15. A tyre according to claim 1, characterized in that the blend forming the tread band (9) contains reinforcing fillers of non-conductive materials.

16. A tyre according to claim 15, characterized in that said reinforcing fillers consist of silicon-based materials.

17. A tyre according to claim 1, characterized in that said conductive insert (12) exhibits an inner end (12b) in contact with another part of the tyre other than the belt layers (6), the carcass layers (2) and/or the sidewalls (7).

18. A tyre according to claim 1, characterized in that said inserts are associated with the tread band during the blend extrusion steps carried out for making said tread band itself.

19. A tyre according to claim 1, characterized in that the extension of said insert (12) in a radial direction is tightly restrained to said tread band thickness.

20. A tyre according to claim 15, characterized in that the blend forming the tread band (9) contains, as a reinforcing fillers, 100% of silicon based reinforcing fillers.

## Patentansprüche

1. Fahrzeugreifen zur Befestigung an einer Felge, der folgendes umfasst:
- zumindest eine Karkassenlage (2), die an jeweils gegenüberliegenden Kanten davon an einem Paar von Wulstkernen (3) verankert ist, die in entsprechenden Wülsten (4) angeordnet sind, die entlang der inneren Umfangskanten des Reifens (1) definiert sind;
- zumindest eine Gurtschicht (6), die sich in Umfangsrichtung um die Karkassenlage (2) erstreckt;
- eine Aufstandsfläche (9), die in Umfangsrichtung um die Gurtschicht (6) angeordnet ist und außen eine Abrollfläche (9a) aufweist, die dazu bestimmt ist, mit dem Untergrund in Berührung zu kommen;
- eine Einrichtung, die zum Entladen von elektrischen Ladungen, die in dem Fahrzeug gespeichert sind, zu dem Untergrund durch einen leitenden Pfad vorgesehen sind, der in dem Reifenaufbau ausgebildet ist;
dadurch gekennzeichnet, dass
- die Karkassenlage (2) und die Gurtschicht (6) leitend und in elektrischem Kontakt miteinander sind;
- die Aufstandsfläche (9) aus einem Füller besteht, der eine Mischung einschließt, deren Widerstand nicht so ist, um einen leitenden Pfad von der Abrollfläche (9a) zu zumindest einer leitenden Gurtschicht (6) zu bilden;
- die Entladeeinrichtung zumindest einen leitenden Einsatz (12) einschließt, der sich radial durch die gesamte Dicke der Aufstandsfläche (9) erstreckt, aus einer Mischung, die einen elektrischen Widerstand aufweist, der geringer als der die Aufstandsfläche bildende Mischung ist, um einen leitenden Pfad von der Abrollfläche (9a) zu zumindest einer leitenden Gurtschicht (6) zu bilden.

2. Reifen nach Anspruch 1, dadurch gekennzeichnet, dass der leitende Einsatz (12) ein inneres Ende (12b) aufweist, das in Berührung mit der Gurtschicht (6) ist.

3. Reifen nach Anspruch 1, dadurch gekennzeichnet, dass der leitende Einsatz (12) ein inneres Ende (12b) aufweist, das in Berührung mit der Karkassenlage (2) ist.

4. Reifen nach Anspruch 1, dadurch gekennzeichnet, dass der leitende Einsatz (12) ein inneres Ende in Berührung mit dem elastomerischen Material aufweist, das eine Reifenseitenwand (7) bildet, wobei die Seitenwand sich außen von der Karkassenlage (2) von dem Wulst (4) zu einer entsprechenden Seitenkante der Aufstandsfläche (9) erstreckt.

5. Reifen nach Anspruch 1, dadurch gekennzeichnet, dass der leitende Einsatz (12) sich über die gesamte Umfangserstreckung der Aufstandsfläche (9) erstreckt.

6. Reifen nach Anspruch 5, dadurch gekennzeichnet, dass der leitende Einsatz (12) an einer zentrierten Position in Bezug zu der Äquatorialebene des Reifens (1) angeordnet ist.

7. Reifen nach Anspruch 5, dadurch gekennzeichnet, dass er zumindest zwei der leitenden Einsätze (12) umfasst, die an gegenüberliegenden Seiten der Äquatorialebene angeordnet sind.

8. Reifen nach Anspruch 7, dadurch gekennzeichnet, dass die leitenden Einsätze (12) an Positionen angeordnet sind, die symmetrisch von der Äquatorialebene des Reifens (1) beabstandet sind, angrenzend an die Seitenkanten der Aufstandsfläche (9).

9. Reifen nach Anspruch 7, dadurch gekennzeichnet, dass zumindest an der Abrollfläche (9a) die Erstreckung von jedem leitenden Einsatz durch Querausschnitte unterbrochen ist, die in der Aufstandsfläche (9) ausgebildet sind, um entsprechende Blöcke (11) in der Aufstandsfläche zu definieren, wobei die leitenden Einsätze (12) mit entsprechenden Reihen von abwechselnd versetzten Blöcken verbunden sind.

10. Reifen nach Anspruch 5, dadurch gekennzeichnet, dass der leitende Einsatz (12) eine Breite gemessen parallel von der Reifenachse aufweist, die zwischen 2 mm und 40 mm liegt.

11. Reifen nach Anspruch 7, dadurch gekennzeichnet, dass die Summe der Breiten der leitenden Einsätze (12) gemessen parallel zu der Reifenachse zwischen 4 mm und 50 mm liegt.

12. Reifen nach Anspruch 1, dadurch gekennzeichnet, dass die Mischung, die den leitenden Einsatz bildet, einen elektrischen Widerstand aufweist, der gleich oder geringer als 10³ kOhm*m ist.

13. Reifen nach Anspruch 12, dadurch gekennzeichnet, dass die Mischung, die den leitenden Einsatz (12) bildet, Verstärkungsfüller auf Rußbasis enthält.

14. Reifen nach Anspruch 13, dadurch gekennzeichnet, dass die Mischung, die die Aufstandsfläche (9) bildet, und die Mischung, die den leitenden Einsatz (12) bildet, derartige elektrische Widerstandswerte, gemessen in kOhm*m, aufweisen, dass die algebraische Summe ihrer Exponenten nicht größer als 11 ist.

15. Reifen nach Anspruch 1, dadurch gekennzeichnet, dass die Mischung, die die Aufstandsfläche (9) bildet, Verstärkungsfüller aus nicht-leitenden Materialien enthält.

16. Reifen nach Anspruch 15, dadurch gekennzeichnet, dass die Verstärkungsfüller aus Materialien auf Siliziumbasis bestehen.

17. Reifen nach Anspruch 1, dadurch gekennzeichnet, dass der leitende Einsatz (12) ein inneres Ende (12b) aufweist, das in Berührung mit einem weiteren Teil des Reifens ist, mit Ausnahme von den Gurtschichten (6), den Karkassenlagen (2) und/oder den Seitenwänden (7).

18. Reifen nach Anspruch 1, dadurch gekennzeichnet, dass die Einsätze mit der Aufstandsfläche verbunden werden, während die Mischungsextrusionsschritte zur Herstellung der Aufstandsfläche selbst ausgeführt werden.

19. Reifen nach Anspruch 1, dadurch gekennzeichent, dass die Ausdehnung des Einsatzes (12) in radialer Richtung eng auf die Dicke der Aufstandsfläche beschränkt ist.

20. Reifen nach Anspruch 15, dadurch gekennzeichnet, dass die Mischung, die die Aufstandsfläche (9) bildet, als Verstärkungsfüller 100 % von Verstärkungsfüllern auf Siliziumbasis enthält.

## Revendications

1. Pneumatique de véhicule pour le montage sur une jante, comprenant :
au moins une nappe carcasse (2) ancrée, aux bords opposés respectifs de celle-ci, à une paire de tringles (3) agencées dans des renflements correspondants (4) définis le long des bords circonférentiels intérieurs dudit pneumatique (1) ;
au moins une couche de ceinture (6) s'étendant circonférentiellement autour de ladite nappe carcasse (2) ;
une bande de roulement (9) disposée circonférentiellement autour de la couche de ceinture (6) et présentant extérieurement une surface de roulement (9a) conçue pour venir en contact avec le sol ;
des moyens étant présents pour décharger vers le sol les charges électrostatiques stockées dans le véhicule par l'intermédiaire d'un trajet conducteur formé dans la structure du pneumatique ;
caractérisé en ce que :
ladite nappe carcasse (2) et ladite couche de ceinture (6) sont conductrices et en contact électrique l'une avec l'autre ;
ladite bande de roulement (9) est constituée d'une charge comprenant un mélange dont la résistivité ne permet pas de constituer un trajet conducteur de ladite surface de roulement (9a) à ladite couche de ceinture conductrice au nombre d'au moins une (6) ;
lesdits moyens de décharge comprennent au moins un élément rapporté conducteur (12) s'étendant radialement à travers toute l'épaisseur de la bande de roulement (9), en un mélange présentant une résistivité électrique inférieure à celle du mélange formant ladite bande, de façon à constituer un trajet conducteur de ladite surface de roulement (9a) à ladite couche de ceinture conductrice au nombre d'au moins une (6).

2. Pneumatique selon la revendication 1, caractérisé en ce que ledit élément rapporté conducteur (12) présente une extrémité intérieure (12b) en contact avec ladite couche de ceinture (6).

3. Pneumatique selon la revendication 1, caractérisé en ce que ledit élément rapporté conducteur (12) présente une extrémité intérieure (12b) en contact avec ladite nappe carcasse (2).

4. Pneumatique selon la revendication 1, caractérisé en ce que ledit élément rapporté conducteur (12) présente une extrémité intérieure (12b) en contact avec le matériau élastomère formant une paroi latérale du pneumatique (7), ladite paroi latérale s'étendant à l'extérieur de la nappe carcasse (2) depuis ledit renflement (4) jusqu'à un bord latéral correspondant de la bande de roulement (9).

5. Pneumatique selon la revendication 1, caractérisé en ce que ledit élément rapporté conducteur (12) s'étend sur toute l'étendue circonférentielle de la bande de roulement (9).

6. Pneumatique selon la revendication 5, caractérisé en ce que ledit élément rapporté conducteur (12) est disposé en une position centrée par rapport au plan équatorial du pneumatique (1).

7. Pneumatique selon la revendication 5, caractérisé en ce qu'il comprend au moins deux desdits éléments rapportés conducteurs (12) disposés sur les côtés opposés dudit plan équatorial.

8. Pneumatique selon la revendication 7, caractérisé en ce que lesdits éléments rapportés conducteurs (12) sont disposés dans des positions mutuellement espacées symétriquement l'une de l'autre par rapport au plan équatorial du pneumatique (1), au voisinage des bords latéraux de la bande de roulement (9).

9. Pneumatique selon la revendication 7, caractérisé en ce qu'au moins au niveau de la surface de roulement (9a), l'étendue de chaque élément rapporté conducteur est interrompue par des entailles transversales formées dans la bande de roulement (9) de façon à définir des blocs respectifs (11) dans ladite surface de roulement, lesdits éléments rapportés conducteurs (12) étant associés à des rangées respectives de blocs mutuellement décalés.

10. Pneumatique selon la revendication 5, caractérisé en ce que ledit élément rapporté conducteur (12) a une largeur, mesurée parallèlement à l'axe du pneumatique, comprise entre 2 mm et 40 mm.

11. Pneumatique selon la revendication 7, caractérisé en ce que la somme des largeurs des éléments rapportés conducteurs (12), mesurées parallèlement à l'axe du pneumatique, est comprise entre 4 mm et 50 mm.

12. Pneumatique selon la revendication 1, caractérisé en ce que le mélange formant l'élément rapporté conducteur a une résistivité électrique inférieure ou égale à 10³ kohms*m.

13. Pneumatique selon la revendication 12, caractérisé en ce que le mélange formant l'élément rapporté conducteur (12) contient des charges de renforcement à base de noir de carbone.

14. Pneumatique selon la revendication 13, caractérisé en ce que le mélange formant la bande de roulement (9) et le mélange formant l'élément rapporté conducteur (12) ont des valeurs de résistivité électrique respectives, mesurées en kohms*m, telles que la somme algébrique de leurs exposants ne soit pas supérieure à 11.

15. Pneumatique selon la revendication 1, caractérisé en ce que le mélange formant la bande de roulement (9) contient des charges de renforcement en matériaux non conducteurs.

16. Pneumatique selon la revendication 15, caractérisé en ce que lesdites charges de renforcement sont composées de matériaux à base de silicium.

17. Pneumatique selon la revendication 1, caractérisé en ce que ledit élément rapporté conducteur (12) présente une extrémité intérieure (12b) en contact avec une autre partie du pneumatique autre que les couches de ceinture (6), les nappes carcasses (2) et/ou les parois latérales (7).

18. Pneumatique selon la revendication 1, caractérisé en ce que lesdits éléments rapportés sont associés à la bande de roulement durant les étapes d'extrusion de mélange effectuées pour réaliser ladite bande de roulement elle-même.

19. Pneumatique selon la revendication 1, caractérisé en ce que l'étendue dudit élément rapporté (12) dans une direction radiale est étroitement restreinte à l'épaisseur de ladite bande de roulement.

20. Pneumatique selon la revendication 15, caractérisé en ce que le mélange formant la bande de roulement (9) contient, comme charges de renforcement, 100% de charges de renforcement à base de silicium.
